(19)

Europäisches
Patentamt
European
Patent Office
Office européen
des brevets

(11) **EP 4 657 538 A1**

(12) **EUROPEAN PATENT APPLICATION**
published in accordance with Art. 153(4) EPC

(43) Date of publication:
**03.12.2025  Bulletin 2025/49**

(21) Application number: **24781319.9**

(22) Date of filing: **29.03.2024**

(51) International Patent Classification (IPC):
*H01M 4/13* (2010.01)          *H01M 4/139* (2010.01)
*H01M 4/62* (2006.01)          *H01M 10/052* (2010.01)
*H01M 4/02* (2006.01)

(52) Cooperative Patent Classification (CPC):
**H01M 4/02; H01M 4/13; H01M 4/139; H01M 4/62;
H01M 10/052; Y02E 60/10**

(86) International application number:
**PCT/KR2024/004095**

(87) International publication number:
**WO 2024/205329 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **29.03.2023   KR 20230040898
28.03.2024   KR 20240042597**

(71) Applicant: **LG Energy Solution, Ltd.
Seoul 07335 (KR)**

(72) Inventors:
• **KIM, Sohee
  Daejeon 34122 (KR)**

• **KWON, Hyejin
  Daejeon 34122 (KR)**
• **KIM, Jeonggil
  Daejeon 34122 (KR)**
• **KIM, Taegon
  Daejeon 34122 (KR)**
• **SONG, Min Sang
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **LITHIUM SECONDARY BATTERY ELECTRODE PLATE AND LITHIUM SECONDARY BATTERY COMPRISING SAME**

(57)     The present invention is directed to an electrode plate for a lithium secondary battery, comprising a current collector layer; and an electrode mixture layer formed on one or both sides of the electrode mixture layer, wherein the electrode mixture layer comprises a first region formed from one edge of the electrode mixture layer in the direction of the other edge relative to a transverse (TD) cross-section of the electrode mixture layer; and a second region excluding the first region, wherein the electrode mixture layer comprises a first particle and a second particle, each comprising an electrode active material, a conductive material, and a binder, wherein the first particle has a higher binder content than the second particle, or contains at least 30% of the total binder content contained in the particle in a region of a length of 20% or less of a length from an outermost surface portion of the particle to a center of the particle, and a lithium secondary battery comprising the same.

[FIG. 1]

**Description**

[Technical Field]

The present application claims the benefit and priority to Korean Patent Application No. 10-2023-0040898, filed March 29, 2023, and Korean Patent Application No. 10-2024-0042597, filed March 28, 2024, the disclosures of which are incorporated herein by reference in their entirety.

The present invention relates to an electrode plate for a lithium secondary battery and a lithium secondary battery comprising the same.

[Related Art]

An important trend in the recent development of the electronics industry can be summarized as the trend of being wireless and mobile of devices and the transition from analog to digital. Examples include the rapid adoption of mobile devices and laptop computers, and the transition from analog to digital cameras.

Along with this trend, research and development of secondary batteries as operating power sources for devices is actively underway. Among them, lithium secondary batteries with high output and capacity relative to weight using lithium transition metal oxide or lithium composite oxide as the positive electrode active material are attracting much attention. A lithium secondary battery consists of an electrode assembly of positive electrode, separator, and negative electrode embedded in a sealed container with electrolyte.

On the other hand, electrodes generate current through the exchange of ions, and the positive electrode and negative electrode constituting an electrode have the structure where an electrode active material is applied onto an electrode current collector that consists of metal.

In general, the positive electrode has the structure where an electrode plate consisting of aluminum, etc. is coated with an active material such as $LiCoO_2$, $LiMnO_2$, or $LiNiO_2$, and the negative electrode has the structure where an electrode plate consisting of copper, aluminum, etc. is applied with a carbon-based active material.

In order to manufacture the electrode plate of a positive electrode or negative electrode, an electrode mixture containing an electrode active material is applied at regular intervals to an electrode current collector consisting of a long metal sheet in one direction, and then processed into a set electrode shape.

The method of applying electrode mixture to the electrode plate can be broadly divided into wet electrode process and dry electrode process.

The wet electrode process is characterized by the preparation of an electrode mixture applied to the electrode current collector, which involves mixing the main components of the electrode mixture, i.e., the electrode active material, the conductive material, and the binder, using an organic solvent such as N-methyl-2-pyrrolidone (NMP) to prepare an electrode mixture slurry, and then applying it to the electrode current collector.

The wet electrode process necessarily requires a step of removing an organic solvent such as NMP, which is separately injected to prepare an electrode mixture slurry to finally manufacture an electrode, and in the process, some of the binders dissolved in the organic solvent may fall out, which may reduce the binding force between the electrode active material/the conductive material and the current collector, and the drying process of removing the organic solvent consumes a large amount of power and cost.

In order to solve these shortcomings of the wet electrode process, a dry electrode process has recently emerged, in which electrodes are manufactured by applying the electrode mixture directly to the electrode current collector without adding a separate organic solvent during the process of preparing the electrode mixture. When manufacturing electrodes for lithium secondary batteries using the above dry electrode process, it is eco-friendly because no solvent is used to prepare the electrode mixture, and it is not necessary to go through a separate solvent drying step, which simplifies the process and reduces costs. In addition, the rolling process allows the electrode mixture to be applied on top of the current collector, which can reduce the electrode thickness and improve the energy density of the electrode, and is being evaluated as a suitable method for making high-nickel or all-solid-state batteries.

However, in the case of the above dry electrode process, the electrode mixture coating on the edge of the electrode is relatively weak compared to the wet electrode process because the step of preparing the electrode mixture slurry using a separate organic solvent is not performed in the preparation of the electrode mixture, and the delamination of the electrode mixture may occur at the edge of the electrode, and there is an urgent need to solve this problem.

[Prior Art Reference]

[Patent Reference]

(Patent Reference 1) Japanese Laid-open Patent Publication No. 2022-075282 (May 18, 2022)

[Detailed Description of the Invention]

[Technical Problem]

It is an object of the present invention to provide an electrode plate for a lithium secondary battery electrode comprising an electrode mixture layer, but having particles having a high binder content or a high surface binder content in a specific region formed from an edge of the mixture layer, so as to prevent delamination of the edge of the electrode plate and increase the energy density of the electrode plate even if the electrode plate is manufactured by a dry electrode process.

Another object of the present invention is to provide a lithium secondary battery comprising the electrode plate for a lithium secondary battery.

[Technical solution]

An embodiment of the present invention provides an electrode plate for a lithium secondary battery, comprising a current collector layer and an electrode mixture layer formed on one or both sides of the current collector layer, wherein the electrode mixture layer comprises a first region formed from an one edge of the electrode mixture layer in the direction of the other edge relative to a transverse (TD) cross-section of the electrode mixture layer; and a second region excluding the first region, wherein the electrode mixture layer comprises a first particle and a second particle each comprising an electrode active material, a conductive material, and a binder, wherein the first particle has a higher binder content than the second particle, or contains at least 30% of the total binder content contained in the particle in a region of a length of 20% or less of a length from an outermost surface portion of the particle to a center of the particle.

The first particle may be included in the first region, and the second particle may be included in the second region.

The first and second particles may be in the form of granules.

The first particle and the second particle may each have an average particle diameter of 30 to 100 $\mu$m.

The first region may be formed in an area ratio of 1% to 20% based on the total area of the electrode mixture layer.

The ratio of the binder content of the first particle to the binder content of the second particle may be 1.2:1 to 3.0:1.

The binders included in the first and second particles may be at least one of polytetrafluoroethylene (PTFE), polyvinylidene difluoride (PVDF), polyethylene (PE), high molecular weight polyethylene (HMWPE), ultra-high molecular weight polyethylene (UHMWPE), polypropylene (PP), carboxymethyl cellulose (CMC), polyvinylphenol, polyvinylpyrrolidine, polyvinyl acetate, polyvinyl alcohol, and polyacetylene.

The first particle may comprise 3.6 to 9% by weight of binder based on the total weight of the first particle, and the second particle may comprise 1 to 5% by weight of binder based on the total weight of the second particle.

The first particle and the second particle may each, independently of each other, further comprise a sulfide-based solid electrolyte represented by Formula 1 below.

$$[\text{Formula 1}] \qquad \text{Li}_k M^2_l S_m X^2_n,$$

wherein $M^2$ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, $X^2$ is F, Cl, Br, I, Se, Te or O, and $0<k\leq6$, $0<l\leq6$, $0<m\leq6$, and $0\leq n\leq6$.

One embodiment of the present invention provides a lithium secondary battery comprising the electrode plate for a lithium secondary battery.

[Advantageous Effects]

According to the present invention, an electrode plate for a lithium secondary battery includes an electrode mixture layer, wherein particles having a high binder content or a high surface binder content is disposed in a specific region formed from the edge of the mixture layer, which causes the effects of preventing delamination of the edge of the electrode plate and increasing the energy density of the electrode plate even if the electrode plate is manufactured by a dry electrode process. In addition, by not applying the wet electrode process to the production of an electrode plate for a lithium secondary battery, the drying step of the organic solvent in the electrode mixture slurry can be omitted, making it an environmentally friendly process, and the production unit cost can be lowered, making it economical.

[Brief Description of Drawing]

FIGs. 1 and 2 are schematic diagrams illustrating the structure of an electrode plate for a lithium secondary battery according to one embodiment of the present invention.

FIG. 3 is an image of an electrode mixture layer comprising particles according to a preparation example of the present invention and comparative preparation examples, formed on a current collector.

FIGs. 4 and 5 show scanning electron microscope (SEM) images of particles according to a preparation example of the present invention and the results of measuring the average particle diameter of the particles using a particle size analyzer.

FIGs. 6 to 8 are images of an electrode plate for a lithium secondary battery according to one embodiment of the present invention.

FIG. 9 is a scanning electron microscope (SEM) image of an electrode plate for a lithium secondary battery according to one embodiment of the present invention.

FIG. 10 is a carbon EDS mapping image of an electrode plate for a lithium secondary battery according to one embodiment of the present invention.

[Best Mode for Practicing the Invention]

Embodiments of the present invention are described in detail below. It should be noted that the terms and words used in this specification and claims are not to be construed in their ordinary or dictionary sense, but rather in a sense and concept consistent with the technical idea of the present invention, based on the principle that the inventor(s) may define the concept of a term as he/she sees fit to best describe his/her invention. Accordingly, it is to be understood that the configurations described in the embodiments described herein are only the most preferred embodiments of the present invention and are not exhaustive of the technical ideas of the present invention, and that there may be various equivalents and modifications that may be substituted for them at the time of filing.

Throughout the specification, when any part "includes" any component, it does not mean the exclusion of other components, but may indicate the inclusion of other components, unless specifically stated to the contrary.

In addition, the description limiting or further specifying components may be applied to any invention and is not limited to any particular invention, unless otherwise specified.

Also, throughout the description and claims of the present invention, the singular expressions may include the plural expressions unless otherwise indicated.

Also, throughout the description and claims of the present invention, "or" includes "and" unless otherwise noted. Thus, "comprising A or B" means all three of the following cases: comprising A, comprising B, or comprising A and B.

Also, all numerical ranges include values at both ends and all intermediate therebetween, unless explicitly stated to exclude them.

Throughout the specification, the average particle diameter of a particle may be a median diameter (D50) measured, for example, using a laser particle size distribution meter.

The following describes a complex sulfide-based solid electrolyte according to one embodiment of the present invention.

The present invention relates to an electrode plate for a lithium secondary battery, which can prevent delamination of the edge of the electrode plate and improve the energy density of the electrode plate when manufacturing an electrode for a lithium secondary battery by a dry electrode process, and a lithium secondary battery comprising the electrode plate.

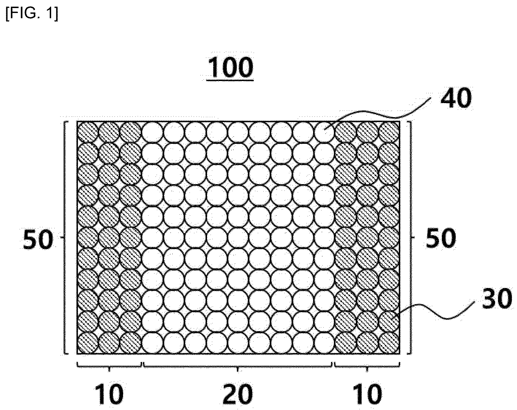

FIG 1 is a schematic diagram illustrating an electrode plate for a lithium secondary battery according to one embodiment of the present invention. Referring to FIG 1, an electrode plate (100) for a lithium secondary battery according to one embodiment of the present invention includes a current collector layer (not shown in the drawing) and an electrode mixture layer formed on one or both sides of the current collector layer, wherein the electrode mixture layer comprises a first region (10) formed from one edge (50) of the electrode mixture layer in the direction of the other edge (10) relative to a transverse (TD) cross-section of the electrode mixture layer, a second region (20) excluding the first region, wherein the electrode mixture layer comprises a first particle (30) and a second particle (40) each comprising an electrode active material, a conductive material, and a binder, wherein the first particle (30) has a higher binder content than the second particle (40), or contains at least 30% of the total binder content contained in the particle in a region of a length of 20% or less of a length from an outermost surface portion of the particle to a center of the particle.

The electrode plate for a lithium secondary battery according to the present invention includes particles of a particular structure having a high binder content in a region formed in a certain range based on a transverse (TD) cross-section of the electrode mixture layer relative to an edge portion of the electrode mixture layer, or having a binder content concentrated in a certain region of a length from the outermost surface portion of the particles to the center of the particles; so it provides improved binding force to the edge portion of the electrode plate, thereby to prevent delamination of the edge portion even when the electrode plate is manufactured by a so-called "dry electrode process" that does not use a separate solvent, such as an organic solvent, to prepare an electrode plate, in particular an electrode mixture, for manufacturing an electrode plate for a lithium secondary battery, and because the electrode plate for a lithium secondary battery can be more easily applied to a dry electrode process, the energy density of the electrode plate can be improved compared to an electrode plate manufactured by a wet electrode process.

In the present invention, an electrode plate for a lithium secondary battery may have a structure where an electrode mixture comprising an electrode active material is applied to an electrode current collector comprising a metal sheet elongated in one direction.

In the present invention, an electrode mixture may refer to a mixture applied to an electrode plate for a lithium secondary battery, and may be, for example, a composition of an electrode active material, a conductive material, a binder, and other components, each of which is described later.

In one embodiment of the present invention, the first particle (30) and the second particle (40) may be in the form of a granule formed by mixing and agglomerating the component particles of electrode active material, conductive material, binder, and other components contained in each particle. For example, the first particle (30) and the second particle (40) may be in the form of a granule in which the component particles of the electrode active material, conductive material, binder, and other components are uniformly mixed and distributed, or they may be in the form of a granule in which any one component is biased toward a particular region.

In one embodiment of the present invention, the average particle diameter of the first particle (30) may be 30 to 100 $\mu$m, for example 35 to 95 $\mu$m, 40 to 90 $\mu$m, and preferably 50 to 80 $\mu$m.

In one embodiment of the present invention, the average particle diameter of the second particle (40) may be 30 to 100 $\mu$m, for example 35 to 95 $\mu$m, 40 to 90 $\mu$m, and preferably 50 to 80 $\mu$m.

In one embodiment of the present invention, the first particle (30) may comprise 3.6 to 9% by weight of binder based on the total weight of the first particle comprising the electrode active material, the conductive material, and the binder, such as 3.6 to 8.0% by weight, 3.8 to 7.0% by weight, and preferably 4.0 to 6.0% by weight of binder.

If the binder content of the first particle is less than 3.6% by weight, there may be a problem that the adhesion to the electrode plate of the first particle applied to the edge of the electrode plate for a lithium secondary battery may be reduced, and if it exceeds 9% by weight, there may be a problem that the resistance of the electrode plate may be increased by the first particle, so it should be adjusted appropriately within the above range.

In one embodiment of the present invention, the second particle (40) may comprise 1 to 5% by weight of binder based on the total weight of the second particle comprising the electrode active material, the conductive material, and the binder, for example, 1.5 to 4.5% by weight, 2 to 4.0% by weight, and preferably 2.5 to 3.5% by weight of binder.

If the binder content of the second particle is less than 1% by weight, there may be a problem that the manufacturing yield of the second particle may be reduced, and if it exceeds 5% by weight, there may be a problem that the resistance of the electrode plate may be increased by the second particle, so adjust it appropriately within the above range.

Further, in one embodiment of the present invention, the ratio of the binder content of the first particle (30) to the binder content of the second particle (40) can be 1.2:1 to 3.0:1, such as 1.3:1 to 2.9:1, 1.4:1 to 2.8:1, or 1.5:1 to 2.7:1.

Since there may be a problem that the effect of improving adhesion in an electrode plate for a lithium secondary battery by the first particle and the second particle may be reduced if the ratio of the binder content of the first particle to the binder content of the second particle is below the above range, and the resistance of the electrode plate may be increased if the ratio exceeds the above range, in order to prevent delamination of the edge portion of the electrode plate that may occur when the electrode plate for a lithium secondary battery according to the present invention is manufactured by a dry electrode process, the content of the binder in the first particle (30) and the second particle (40) included in the electrode mixture layer is preferably within the above range.

In the case of the first particle (30) included in the electrode mixture layer of the electrode plate for a lithium secondary battery according to the present invention, it may have a higher binder content in the particle compared to the second particle (40), or may be distributed as containing at least 30% of the binder content contained in the particle in a region that is 20% or less of the length from the outermost surface portion of the particle to the center of the particle.

For example, the first particle (30) may be a "core-shell structure" in which the shell portion of the first particle (30) is formed in an area that is 20% of the length from the outermost surface portion of the particle to the center of the particle, and the remaining area to the center is formed as a "core." In this case, the shell portion of the first particle (30) may be in a form in which at least 30% of the binder content contained within the first particle is distributed. **In** other words, the first particle (30) may comprise an electrode active material, a conductive material, and a binder, and since a binder, in particular, is characterized to be distributed to be biased toward the relative periphery of the first particle, the first particle (30) can increase the binding force with other neighboring first particles or the current collector layer to prevent delamination of the edge portion of the electrode plate for a lithium secondary battery.

When the first particle (30) is formed in a "core-shell structure" as described above, the region where the binder is positioned to be biased may be a region that is 20% of the length from the outermost surface of the particle to the center of the particle, or a region that is 1% to 20% of the length from the outermost surface of the particle to the center of the particle.

When the first particle (30) is formed in a "core-shell structure" as described above, a region that is 20% or less of the length from the outermost surface of the particle to the center of the particle may contain at least 30% of the total binder content contained within the first particle.

**In** one embodiment of the present invention, the binder included in the first particle (30) and the second particle (40) may be at least one of polytetrafluoroethylene (PTFE), polyvinylidene difluoride (PVDF), polyethylene (PE), high molecular weight polyethylene (HMWPE), ultra-high molecular weight polyethylene (UHMWPE), polypropylene (PP), carboxymethyl cellulose (CMC), polyvinylphenol, polyvinylpyrrolidine, polyvinyl acetate, polyvinyl alcohol, and polyacetylene, and preferably polytetrafluoroethylene (PTFE).

In one embodiment of the present invention, the first particle (30) may be included in the first region (10) of the electrode mixture layer, and the second particle (40) may be included in the second region (20) of the electrode mixture layer.

The first region (10) refers to a portion formed in a certain area in the direction of the other edge from one edge (50) of the electrode mixture layer based on a transverse (TD) cross-section of the electrode mixture layer, and may be formed only on one side, or on both sides relative to both edges of the electrode mixture layer, preferably on both sides relative to the positive electrode edge of the electrode mixture layer to prevent edge delamination of the electrode plate for a lithium secondary battery.

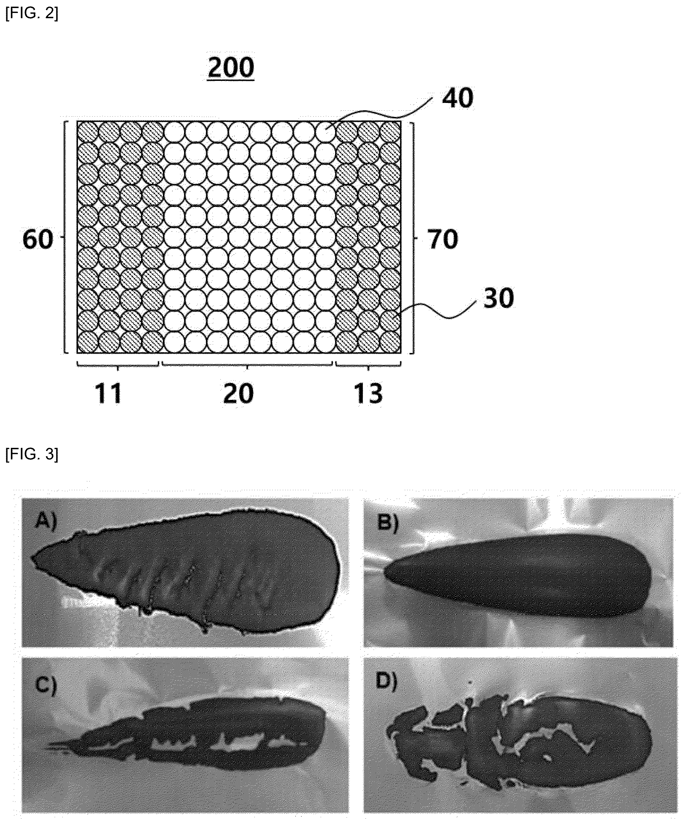

Referring to FIG. 2, in the electrode plate (200) for a lithium secondary battery according to the present invention, a first region may be formed on both sides relative to the first edge (60) and the second edge (70) of the electrode mixture layer to form first regions (11, 13) having different areas, as needed.

In one embodiment of the present invention, the first regions (10, 11, 13) may be formed in an area ratio of 1% to 20% based on the total area of the electrode mixture layer, such as 2% to 19%, 3% to 18%, and preferably 5% to 15%.

If the area ratio of the first region is less than 1% based on the total area of the electrode mixture layer, there may be a problem that the adhesion of the edge of the electrode plate for a lithium secondary battery may decrease, and if it exceeds 20%, there may be a problem that the resistance of the electrode plate may increase, so it should be adjusted appropriately within the above range.

Another embodiment of the present invention provides a lithium secondary battery comprising the electrode plate for a lithium secondary battery.

The lithium secondary battery may be in the form of a battery comprising a positive electrode, a negative electrode, and a separator interposed between the positive electrode and negative electrode, or may be in the form of an all-solid-state battery comprising a solid electrolyte between the positive electrode and the negative electrode without the use of a separate separator.

The electrode plate for a lithium secondary battery according to the present invention may be a positive electrode or a negative electrode.

The positive electrode may be a structure having a positive electrode mixture layer laminated to one or both sides of the positive electrode current collector.

For example, the positive electrode mixture layer may comprise a positive electrode active material, a conductive material, and a binder, and may further comprise a positive electrode additive as desired and conventionally used in the art.

The positive electrode active material is not particularly limited, and may be any material capable of reversible adsorption and release of lithium ions, and may include, for example, one or more of the following: a metal such as cobalt, manganese, nickel, iron, or a combination thereof; and a complex compound of lithium.

As a more specific example, as the positive electrode active material, a compound represented by any one of the following chemical formulae can be used: $Li_aA_{1-b}R_bD_2$ (wherein $0.90 \leq a \leq 1.8$ and $0 \leq b \leq 0.5$); $Li_aE_{1-b}R_bO_{2-c}D_c$ (wherein $0.90 \leq a \leq 1.8$, $0 \leq b \leq 0.5$ and $0 \leq c \leq 0.05$); $LiE_{2-b}R_bO_{4-c}D_c$ (wherein $0 \leq b \leq 0.5$ and $0 \leq c \leq 0.05$); $Li_aNi_{1-b-c}Co_bR_cD_\alpha$ (wherein $0.90 \leq a \leq 1.8$, $0 \leq b \leq 0.5$, $0 \leq c \leq 0.05$ and $0 < \alpha \leq 2$); $Li_aNi_{1-b-c}Co_bR_cO_{2-\alpha}Z_\alpha$ (wherein $0.90 \leq a \leq 1.8$, $0 \leq b \leq 0.5$, $0 \leq c \leq 0.05$ and $0 < \alpha < 2$); $Li_aNi_{1-b-c}Co_bR_cO_{2-\alpha}Z_2$ (wherein $0.90 \leq a \leq 1.8$, $0 \leq b \leq 0.5$, $0 \leq c \leq 0.05$ and $0 < \alpha < 2$); $Li_aNi_{1-b-c}Mn_bR_cD_\alpha$ (wherein $0.90 \leq a \leq 1.8$, $0 \leq b \leq 0.5$, $0 \leq c \leq 0.05$ and $0 < \alpha \leq 2$); $Li_aNi_{1-b-c}Mn_bR_cO_{2-\alpha}Z_\alpha$ (wherein $0.90 \leq a \leq 1.8$, $0 \leq b \leq 0.5$, $0 \leq c \leq 0.05$ and $0 < \alpha < 2$); $Li_aNi_{1-b-c}Mn_bR_cO_{2-\alpha}Z_2$ (wherein $0.90 \leq a \leq 1.8$, $0 \leq b \leq 0.5$, $0 \leq c \leq 0.05$ and $0 < \alpha < 2$); $Li_aNi_bE_cG_dO_2$ (wherein $0.90 \leq a \leq 1.8$, $0 \leq b \leq 0.9$, $0 \leq c \leq 0.5$ and $0.001 \leq d \leq 0.1$); $Li_aNi_bCo_cMn_dG_eO_2$ (wherein $0.90 \leq a \leq 1.8$, $0 \leq b \leq 0.9$, $0 \leq c \leq 0.5$, $0 \leq d \leq 05$ and $0 \leq e \leq 0.1$); $Li_aNiG_bO_2$ (wherein $0.90 \leq a \leq 1.8$ and $0.001 \leq b \leq 0.1$); $Li_aCoG_bO_2$ (wherein $0.90 \leq a \leq 1.8$ and $0.001 \leq b \leq 0.1$); $Li_aMnG_bO_2$ (wherein $0.90 \leq a \leq 1.8$ and $0.001 \leq b \leq 0.1$); $Li_aMn_2G_bO_4$ (wherein $0.90 \leq a \leq 1.8$ and $0.001 \leq b \leq 0.1$); $QO_2$; $QS_2$; $LiQS_2$; $V_2O_5$; $LiV_2O_5$; $LiTO_2$; $LiNiVO_4$; $Li_{(3-f)}J_2(PO_4)_3$ (wherein $0 \leq f \leq 2$); $Li_{(3-f)}Fe_2(PO_4)_3$ (wherein $0 \leq f \leq 2$); and $LiFePO_4$

In the above formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or any combination thereof; G is Al, Cr, Mn, Fe, Mg, La, Ce, Sr, V, or any combination thereof; Q is Ti, Mo, Mn, or any combination thereof; T is Cr, V, Fe, Sc, Y, or any combination thereof; J is V, Cr, Mn, Co, Ni, Cu, or any combination thereof.

The conductive material is not particularly limited as long as it has conductivity without causing any chemical changes in the battery, for example, graphite, such as natural graphite or artificial graphite; carbon black, such as carbon black, acetylene black, ketjen black, channel black, furnace black, lamp black, or summer black; conductive fibers, such as carbon fibers or metal fibers; metal powders, such as carbon fluoride, aluminum, or nickel powder; conductive whiskeys, such as zinc oxide, or potassium titanate; conductive metal oxides, such as titanium oxides; conductive materials, such as polyphenylene derivatives. The conductive material may be included in about 0.01 to 10 parts by weight, or 0.01 to 5 parts by weight, or 0.01 to 3 parts by weight, or 0.01 to 5 parts by weight, based on 100 parts by weight of the positive electrode mixture layer as a whole.

The binder is a component added in consideration of the adhesion of the positive electrode active material, the conductive material, and other components in the positive electrode mixture layer, and since the binder included in the electrode mixture layer according to the present invention has been described previously, further description is omitted hereinafter.

If the lithium secondary battery according to the present invention is an all-solid-state battery comprising a solid electrolyte layer between a positive electrode and a negative electrode, the positive electrode may further comprise a solid electrolyte.

The solid electrolyte may be broadly divided into a polymeric solid electrolyte, an oxide solid electrolyte, or a sulfide solid electrolyte, for example, when the positive electrode comprises a sulfide solid electrolyte, the sulfide solid electrolyte may be represented by Formula 1 below.

[Formula 1]  $Li_k M^2_l S_m X^2_n$,

wherein $M^2$ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, $X^2$ is F, Cl, Br, I, Se, Te or O, and $0<k\leq6$, $0<l\leq6$, $0<m\leq6$, and $0\leq n\leq6$.

For example, in Formula 1, $M^2$ may be B, Si, Ge, P or N.

For example, in Formula 1, $X^2$ may be F, Cl, Br, I or O.

For example, the sulfide-based solid electrolyte represented by Formula 1 may be at least one selected from $Li_2S-P_2S_5$, $Li_2S-P_2S_5-LiX$, wherein X is a halogen atom, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$, wherein m and n are positive numbers, Z is any one of Ge, Zn and Ga, $Li_2S-GeS_2$, $Li_2S-SiS_2-Li_3PO_4$, $Li_2S-SiS_2-Li_pMO_q$, wherein p and q are positive numbers, wherein M is any one of P, Si, Ge, B, Al, Ga and In, $Li_{7-x}PS_{6-x}Cl_x$, wherein $0\leq x\leq2$, $Li_{7-x}PS_{6-x}Br_x$, wherein $0\leq x\leq2$, and $Li_{7-x}PS_{6-x}I_x$, wherein $0\leq x\leq2$.

Furthermore, preferably the sulfide-based solid electrolyte may be an argyrodite-type solid electrolyte comprising one or more selected from $Li_6PS_5Cl$, $Li_6PS_5Br$ and $Li_6PS_5I$.

The positive electrode can be manufactured according to methods well known in the art, and is not limited to a particular manufacturing method, but can be manufactured, for example, by mixing the positive electrode active material, a sulfide-based solid electrolyte, a conductive material and a binder to form a positive electrode composite paste, spraying and drying it to granulate it, and applying it to the positive electrode current collector.

The positive electrode current collector is typically made with a thickness of 3 to 500 μm. Such positive electrode current collectors are not particularly limited, as long as they have a high conductivity without any causing chemical changes in the battery, for example, stainless steel, aluminum, nickel, titanium, calcined carbon, or aluminum or stainless steel surface treated with carbon, nickel, titanium, silver, or the like. The current collector may also have microscopic irregularities on its surface to increase the adhesion of the positive electrode active material, and may be in the various forms, such as a film, sheet, foil, net, porous material, foam, nonwoven material, etc.

In addition to the positive electrode active material, conductive material and binder described above, the positive electrode may further comprise additives, for example, fillers, coatings, dispersants, or ionic conductivity aids. As the fillers, coatings, dispersants, or ionic conductivity aids, any of the materials commonly used for electrodes of all-solid-state secondary batteries can be used.

The thickness of the positive electrode may be, for example, 70 to 150 μm.

The negative electrode may comprise a negative electrode current collector and a negative electrode mixture layer.

The thickness of the negative electrode mixture layer is, for example, 50% or less, 40% or less, 30% or less, 20% or less, 10% or less, or 5% or less of the thickness of the positive electrode mixture layer. The thickness of the negative electrode active material layer is, for example, 1 μm to 20 μm, 2 μm to 10 μm, or 3 μm to 7 μm.

The negative electrode mixture layer includes, for example, a negative electrode active material that forms an alloy or compound with lithium.

The negative electrode active material comprised in the negative electrode mixture layer has, for example, a particulate form. The negative electrode active material having a particle shape has an average particle diameter of, for example, 4 μm or less, 3 μm or less, 2 μm or less, 1 μm or less, or 900 nm or less. The average particle diameter of the negative electrode active material having a particle shape is, for example, 10 nm to 4 μm or less, 10 nm to 3 μm or less, 10 nm to 2 μm or less, 10 nm to 1 μm or less, or 10 nm to 900 nm or less.

The negative electrode active material comprised in the negative electrode mixture layer includes at least one selected from, for example, a carbon-based negative electrode active material and a metallic or semi-metallic negative electrode active material.

The carbon-based negative electrode active material is in particular amorphous carbon. Amorphous carbons may be, for example, carbon black (CB), acetylene black (AB), furnace black (FB), ketjen black (KB), or graphene, but are not necessarily limited thereto and can be any carbon classified as amorphous in the art. Amorphous carbons are carbons that are not crystalline or have very low crystallinity, as distinguished from crystalline or graphitic carbons.

A metallic or semi-metallic negative electrode active material includes one or more selected from the group consisting of, but is not necessarily limited to, gold (Au), platinum (Pt), palladium (Pd), silicon (Si), silver (Ag), aluminum (Al), bismuth (Bi), tin (Sn), and zinc (Zn), as long as it is used as a metallic negative electrode active material or semi-metallic negative electrode active material in the art forming an alloy or compound with lithium. For example, nickel (Ni) is not a metal negative electrode active material because it does not form an alloy with lithium.

The negative electrode mixture layer may comprise any one of these negative electrode active materials, or may comprise a mixture of a plurality of different negative electrode active materials. For example, the negative electrode mixture layer comprises only amorphous carbon, or comprises at least one selected from the group consisting of gold (Au), platinum (Pt), palladium (Pd), silicon (Si), silver (Ag), aluminum (Al), bismuth (Bi), tin (Sn), and zinc (Zn). In another embodiment, the negative electrode active material layer comprises a mixture of amorphous carbon with one or more selected from the group consisting of gold (Au), platinum (Pt), palladium (Pd), silicon (Si), silver (Ag), aluminum (Al), bismuth (Bi), tin (Sn), and zinc (Zn). The mixture of amorphous carbon and silver (Ag) may have a weight ratio of, for example, 10:1 to 1:2, 5:1 to 1:1, or 4:1 to 2:1, but is not necessarily limited to these ranges.

The negative electrode active material comprised in the negative electrode mixture layer comprises, for example, a mixture of first particles consisting of amorphous carbon and second particles consisting of a metal or semi-metal. The metal or semi-metal comprises, for example, gold (Au), platinum (Pt), palladium (Pd), silicon (Si), silver (Ag), aluminum (Al), bismuth (Bi), tin (Sn), or zinc (Zn). A semi-metal is otherwise a semi-conductive material. The content of the second particles may be 8 to 60% by weight, 10 to 50% by weight, 15 to 40% by weight, or 20 to 30% by weight, based on the total weight of the mixture.

The negative electrode mixture layer may further comprise a conductive material and a binder, as described above for the positive electrode mixture layer, and as described above for the conductive material and the binder.

The negative electrode current collector consists of, for example, a material that does not react with lithium, i.e., does not form both alloys and compounds. The materials consisting of the negative electrode current collector are, for example, copper (Cu), stainless steel, titanium (Ti), iron (Fe), cobalt (Co) or nickel (Ni), but are not necessarily limited thereto, and may be any materials as long as they are used as electrode current collectors in the art. The negative electrode current collector may consist of one of the metals described above, or an alloy of two or more metals or a coating material. The negative electrode current collector may be, for example, in the form of a plate or foil.

The negative electrode mixture layer can further comprise additives used in conventional lithium secondary batteries, such as fillers, dispersants, etc.

If the lithium secondary battery according to the present invention is an all-solid-state battery, it may further comprise a solid electrolyte layer between the positive electrode and the negative electrode, for example, the solid electrolyte layer may comprise a sulfide-based solid electrolyte. The sulfide-based solid electrolyte may be the same as or different from the sulfide-based solid electrolyte included in the positive electrode.

For specific information on sulfide-based solid electrolytes, see the above descriptions for the positive electrode.

The elastic modulus, or Young's modulus, of the solid electrolyte layer is, for example, 35 GPa or less, 30 GPa or less, 27 GPa or less, 25 GPa or less, 23 GPa or less. The elastic modulus, or Young's modulus, of the solid electrolyte is, for example, 10 to 35 GPa, 15 to 35 GPa, 15 to 30 GPa, or 15 to 25 GPa. The solid electrolyte layer having an elastic modulus in this range facilitates the pressurization and/or sintering of the solid electrolyte.

The solid electrolyte layer further comprises, for example, a binder. The binder included in the solid electrolyte layer may be, for example, but not limited to, styrene butadiene rubber (SBR), polytetrafluoroethylene, polyvinylidene fluoride, polyvinylidene fluoride, or polyethylene, or any other binder known in the art. The binder of the solid electrolyte layer may be the same as or different from the binder of the positive electrode mixture layer and the negative electrode mixture layer.

A lithium secondary battery according to the present invention may be manufactured, for example, by manufacturing a positive electrode, a negative electrode and a solid electrolyte layer, respectively, and then stacking these layers.

A lithium secondary battery according to the present invention may be implemented as a battery module comprising the lithium secondary battery as a unit cell, a battery pack comprising the battery module, and a device comprising the battery pack as a power source.

Specific examples of such devices include, but are not limited to, power tools powered by an electric motor; electric vehicles, including electric vehicles (EVs), hybrid electric vehicles (HEVs), or plug-in hybrid electric vehicles (PHEVs); electric two-wheeled vehicles, including electric bicycles (E-bikes) and electric scooters (E-scooters); electric golf carts; and power storage systems.

[Mode for Practicing the Invention]

Hereinafter, examples are provided in order to illustrate the present invention in detail. However, the examples described below are intended only to specifically illustrate or describe the present invention and are not intended to limit the present invention. Furthermore, descriptions on matters not described herein that can be fully and technically inferred by those skilled in the art are omitted.

## Preparation Example 1: Preparation of electrode mixture layer particles

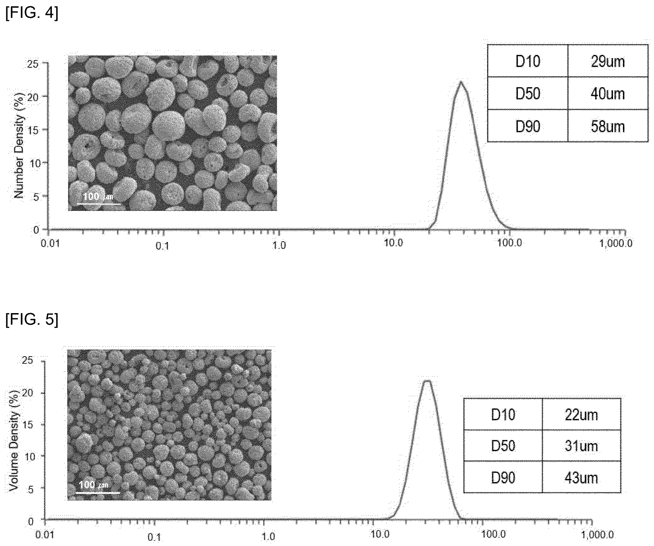

(1) 94% by weight of positive electrode active material comprising nickel, cobalt, and manganese in a weight ratio of 8:1:1, 1% by weight of carbon black conductive material, and 5% by weight of polytetrafluoroethylene (PTFE) binder were mixed together with water as a dispersant to prepare a slurry with a viscosity of about 1,000 cPs through a homogenizer. The solids content of the slurry was 30% by weight.
(2) The above prepared slurry was injected into a spray dryer with hot air at a pressure range of -40 mmH$_2$O and dried to prepare granule-shaped electrode mixture layer particles. The conditions of the spray dryer were controlled at an inlet temperature of 180°C, an outlet temperature of 90°C, and a rotational speed of 18,000 rpm. The average particle diameter (D50) of the obtained granule-shaped particles was measured using a particle size analyzer, and the morphology was measured using a scanning electron microscope (SEM), and the results are shown in FIG. 4.

## Preparation Examples 2 to 6: Preparation of electrode mixture layer particles

In the Preparation Example 1, granule-shaped electrode mixture layer particles were prepared as in the above Preparation Example 1, except that the content of the positive electrode active material, the conductive material, the binder, and the spray drying time were as shown in Table 1. The average particle diameter (D50) of the electrode mixture layer particles according to Preparation Example 2 was measured using a particle size analyzer, and the morphology was measured using a scanning electron microscope (SEM), and the results are shown in FIG. 5, and the average (D50) of the particles according to Preparation Examples 3 to 6 was measured by the same method and shown in Table 1 below.

[Table 1]

| Preparation Example | Positive electrode active material (% by weight) | Conductive material (% by weight) | Binder (% by weight) | Average particle diameter (D50) ($\mu$m) | Relative drying speed |
|---|---|---|---|---|---|
| 1 | 94 | 1 | 5 | 50 | 1 |
| 2 | 94 | 1 | 5 | 30 | 1 |
| 3 | 94 | 1 | 5 | 30 | 1.5 |
| 4 | 94 | 1 | 5 | 30 | 2 |
| 5 | 94 | 4 | 2 | 50 | 1 |
| 6 | 94 | 4 | 2 | 30 | 1 |

## Example 1: Preparation of an electrode plate for a lithium secondary battery

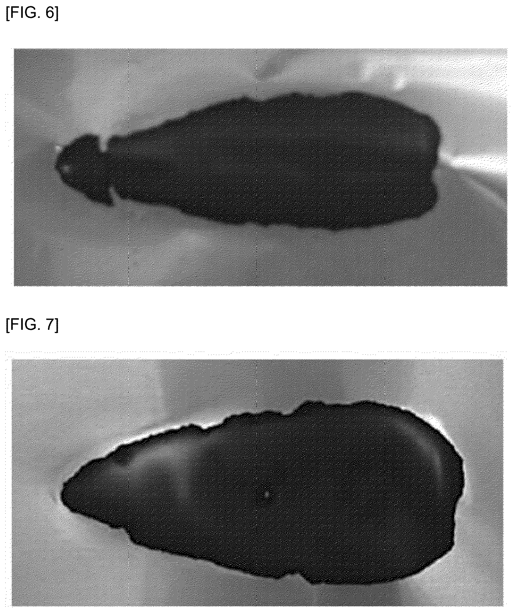

An electrode plate for a lithium secondary battery formed in the electrode mixture layer on the current collector layer was prepared by applying the granule-shaped electrode mixture layer particles prepared in the Preparation Examples 1 and 5 in an amount of 400 mg per 25 cm$^2$ of the current collector to the current collector layer in different areas by using a thickness control bar on one side of a current collector layer formed of aluminum foil, and pressing with a roll-to-roll hot rolling forming device at a pressure of 0.7 ton per cm and a speed of 2 m per minute at a condition of 60°C, and the result is shown in FIG. 6.
Specifically, the electrode mixture layer particles prepared in Preparation Example 1 were applied to one edge of the prepared electrode mixture layer and to the other edge formed on the other side based on a transverse cross-section of the electrode mixture layer, and the electrode mixture layer particles prepared in Preparation Example 5 were applied to the area excluding the above two edges of the electrode mixture layer, so that the granule-shaped particles having a high content of binder are located at the edges of the electrode mixture layer. The two edge portions are formed in 30 area% of the total area of the electrode mixture layer.

Referring to FIG. 6, it can be seen that the aluminum foil is somewhat crumpled at the edges of the electrode mixture layer due to increased stress, but the presence of electrode mixture layer particles with a high binder content at the edges of the electrode mixture layer enables stable sheeting of the electrode mixture layer without the electrode mixture layer detaching from the current collector.

## Example 2: Manufacturing of an electrode plate for a lithium secondary battery

An electrode plate for a lithium secondary battery was prepared as in Example 1, except that the electrode mixture layer particles prepared in Example 2 were applied to the two edges of the electrode mixture layer, and the result is shown in FIG. 7.

Referring to FIG. 7, it can be seen that by arranging high binder particles with a smaller average particle diameter than in Example 1, the edge stress of the electrode mixture layer was reduced, thereby relatively reducing the crumpling of the aluminum foil.

## Example 3: Fabrication of an electrode plate for a lithium secondary battery

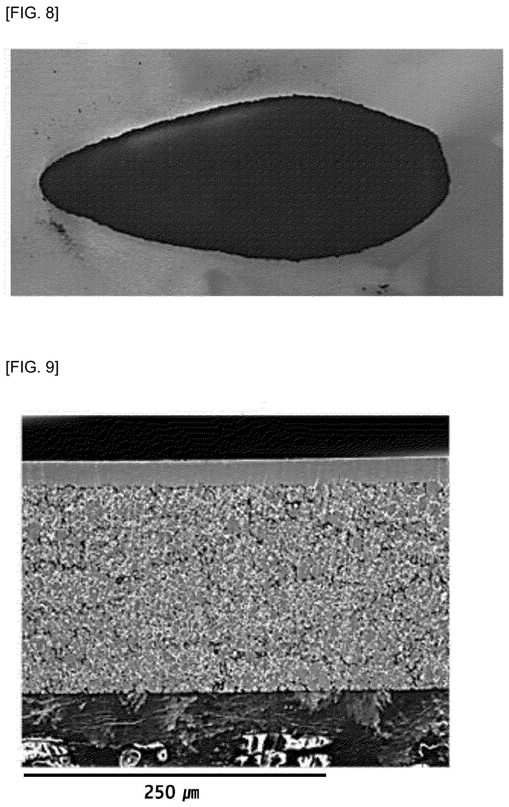

An electrode plate for a lithium secondary battery was prepared as in Example 1, except that the particles of the electrode mixture layer prepared in Preparation Example 4 were applied to the two edges of the electrode mixture layer, and the result is shown in FIG. 8.

Referring to FIG. 8, it can be seen that as a result of using the particles prepared by increasing the drying speed for preparing the granule-shaped particles compared to the high binder particles used in Example 2, the crumpling of aluminum foil was significantly reduced, and the adhesion of the current collector and electrode mixture layer was further improved. This can be understood as a result of increasing the drying speed when preparing the granule-shaped particles compared to Preparation Example 1 or 2, which improves the adhesion of the particles as the binder components in the particles migrate to the surface of the particles with the evaporation of the dispersant.

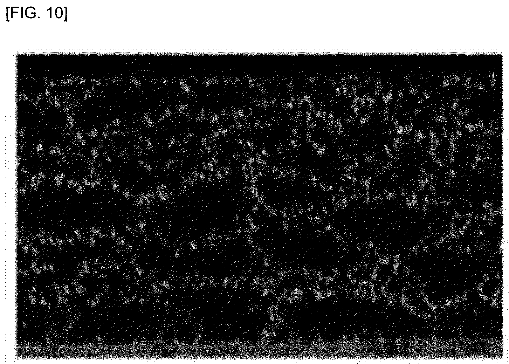

FIG. 9 is a scanning electron microscope (SEM) image of an electrode plate for a lithium secondary battery according to Example 3, and FIG. 10 is a carbon EDS mapping image of an electrode plate for a lithium secondary battery according to Example 3.

Referring to FIGs. 9 and 10, it can be seen from the carbon EDS mapping image of the plate for a lithium secondary battery electrode according to Example 3 that the granule-shaped particles with binder migration to the surface of the particles are applied to the edges of the electrode mixture layer.

## Comparative Example 1: Manufacturing of an electrode plate for a lithium secondary battery

An electrode plate for a lithium secondary battery formed in the electrode mixture layer was prepared by applying the granule-shaped electrode mixture layer particles prepared in Preparation Example 1 in an amount of 400 mg per 25 $cm^2$ of the current collector layer to the current collector layer by using a thickness control bar on one side of a current collector layer formed of aluminum foil, and pressing with a roll-to-roll hot rolling forming device at a pressure of 0.7 ton per cm and a speed of 2 m per minute at a condition of 60°C, and the result is shown in FIG. 3 B).

Referring to FIG. 3 B), as a result of forming an electrode mixture layer using a single particle prepared in Preparation Example 1, the adhesion of the electrode mixture layer to the current collector was at a good level, but the aluminum foil was crumpled as a result of the increased stress at the edge of the electrode mixture layer.

## Comparitive Example 2: Manufacturing of an electrode plate for a lithium secondary battery

In Comparative Example 1, an electrode plate for a lithium secondary battery was prepared as in Comparative Example 1, except that the particles prepared in Comparative Example 2 were applied instead of the particles prepared in Comparative Example 1, and the result is shown in FIG. 3 C).

Referring to FIG. 3 C), as a result of forming an electrode mixture layer using a single particle prepared in Preparation Example 2, it was confirmed that the average particle diameter of the particle was relatively small compared to the particle prepared in Preparation Example 1, resulting in a decrease in the content of the binder located on the surface of the particle, resulting in a decrease in the adhesion, and therefore, the packing of the electrode mixture layer was not smooth.

## Comparative Example 3: Manufacturing of an electrode plate for a lithium secondary battery

In Comparative Example 1, an electrode plate for a lithium secondary battery was prepared as in Comparative Example 1, except that the particles prepared in Preparation Example 4 were applied instead of the particles prepared in Preparation Example 1, and the result is shown in FIG. 3 D).

Referring to FIG. 3 D), as a result of forming the electrode mixture layer using a single particle prepared in Preparation Example 4, it was confirmed that the adhesion of the electrode mixture layer to the current collector layer was somewhat increased compared to the electrode plate according to Comparative Example 2, but the packing of the electrode mixture layer was still not smooth.

### Comparative Example 4: Manufacturing of an electrode plate for a lithium secondary battery

In Comparative Example 1, an electrode plate for a lithium secondary battery was prepared as in Comparative Example 1, except that the particles prepared in Preparation Example 5 were applied instead of the particles prepared in Preparation Example 1, and the result is shown in FIG. 3 A).

Referring to FIG. 3 A), as a result of forming an electrode mixture layer using a single particle prepared in Preparation Example 5, it was found that the content of the binder in the particle was greatly reduced compared to the particle prepared in Preparation Example 1, and thus the adhesion between the current collector and the electrode mixture layer was greatly reduced.

### Experimental Example: Evaluation of initial discharge capacity, high rate discharge characteristics, and life characteristics of a lithium secondary battery

Initial discharge capacity, high rate discharge characteristics, and lifetime characteristics were evaluated for all-solid-state batteries comprising electrode plates according to Examples 1 to 3, Comparative Example 1, and Comparative Example 4.

The all-solid-state batteries were fabricated by the following method.

150 mg of $Li_6PS_5Cl$ as a solid electrolyte was loaded into a mold cell, and then pelletized at a pressure of 70 MPa. Electrode plates according to Examples 1 to 3, Comparative Example 1 and Comparative Example 4 were loaded as a positive electrode on one side of the solid electrolyte pellet, and 100 mg of a composite negative electrode mixed with $Li_{0.5}In$ and solid electrolyte in a weight ratio of 8:2 was loaded on the other side and pressurized at a pressure of 370 MPa to produce an all-solid-state semi-battery. The bolt of the jig was tightened so that a driving pressure of 70 MPa was applied. For the evaluation of the all-solid-state semi-battery, the battery was sealed to prevent the atmosphere from penetrating into the battery and transferred to a constant temperature chamber for the following electrochemical evaluation.

For the all-solid-state batteries comprising the electrode plates according to Examples 1 to 3, Comparative Example 1 and Comparative Example 4, the initial discharge capacity was evaluated by the following test method. The battery was charged at a rate (C-rate) of 0.1 C until the voltage became 4.3 V (vs. Li) and then cut-off at 4.3 V (vs. Li). The battery was then discharged at a C-rate of 0.1C until the voltage was 3.0V (vs. Li) at discharge (1st cycle). The results are shown in Table 2 below.

For the all-solid-state batteries comprising the electrode plates according to Examples 1 to 3, Comparative Example 1 and Comparative Example 4, the high rate discharge characteristics were evaluated by the following test method. After charging under constant current (0.1C) and constant voltage (1.0V, 0.01C cut-off) conditions, the battery was allowed to rest for 10 minutes, and then discharged under constant current (3.0C) conditions to 2.5V. The high rate discharge characteristics are shown in Table 2 below.

In Table 2 below, the high rate discharge characteristics can be calculated by Equation 1 below.

High rate discharge characteristic (%) = (Discharge rate when discharging the cell to 3.0C)/(Discharge rate when discharging the cell at a rate of 0.1C) * 100      Equation 1

For the all-solid-state batteries comprising the electrode plates according to Examples 1 to 3, Comparative Example 1 and Comparative Example 4, the life characteristics were evaluated by the following test methods. The life characteristics were evaluated by the following test method: charging and discharging 100 times under the conditions of constant current (1C) and constant voltage (1.0V, 0.01C cut-off) charging, rest for 10 minutes, and constant current (1C, room temperature (20°C), 2.5V cut-off) discharging, and the discharge capacity after 100 cycles was measured relative to the initial discharge capacity. The life characteristics are shown in Table 2 below.

[Table 2]

| | Initial discharge capacity (mAh/g) | High rate discharge characteristics (3.0c/0.1c)(%) | Lifetime characteristics (100 cycles, %) |
|---|---|---|---|
| Example 1 | 185.0 | 58 | 83.0 |
| Example 2 | 188.0 | 73 | 90.0 |
| Example 3 | 189.0 | 85 | 92.0 |
| Comparative Example 1 | Evaluation experiments were not conducted due to delamination of the electrode plate | | |
| Comparative Example 4 | Electrode tension was increased, which causes reduction of assembly of the battery | | |

Referring to Table 2, it can be seen that when high binder particles were applied to the electrode mixture layer, the initial discharge capacity, high rate discharge characteristics, and life characteristics of the all-solid-state battery comprising the electrode mixture layer according to Example 3 using particles having a relatively small average particle diameter and a fast drying rate for particle preparation are the best.

[Reference numerals]

10, 11, 13: First region
20: Second region
30: First particle
40: Second particle
50: Edge of the electrode mixture layer
60: First edge of the electrode mixture layer
70: Second edge of the electrode mixture layer
100, 200: Electrode plate for a lithium secondary battery

**Claims**

1.  An electrode plate for a lithium secondary battery, comprising:

     a current collector layer; and
     an electrode mixture layer formed on one or both sides of the current collector layer,
     wherein the electrode mixture layer comprises a first region formed from one edge of the electrode mixture layer in the direction of the other edge relative to a transverse (TD) cross-section of the electrode mixture layer, and a second region excluding the first region,
     wherein the electrode mixture layer comprises a first particle and a second particle each comprising an electrode active material, a conductive material, and a binder,
     wherein the first particle has a higher binder content than the second particle, or contains at least 30% of the total binder content contained in the particle in a region of a length of 20% or less of a length from an outermost surface portion of the particle to a center of the particle.

2.  The electrode plate for a lithium secondary battery according to claim 1,

     wherein the first particle is included in the first region,
     wherein the second particle is included in the second region.

3.  The electrode plate for a lithium secondary battery according to claim 1,
     wherein the first and second particles are in the form of granules.

4.  The electrode plate for a lithium secondary battery according to claim 1,
     wherein the first particle and the second particle have an average particle diameter of 30 to 100 μm each.

5. The electrode plate for a lithium secondary battery according to claim 1,
wherein the first region is formed in an area ratio of 1% to 20% based on the total area of the electrode mixture layer.

6. The electrode plate for a lithium secondary battery according to claim 1,
wherein the ratio of the binder content of the first particle to the binder content of the second particle is between 1.2:1 and 3.0:1.

7. The electrode plate for a lithium secondary battery according to claim 1,
wherein the binders included in the first and second particles may be at least one of polytetrafluoroethylene (PTFE), polyvinylidene difluoride (PVDF), polyethylene (PE), high molecular weight polyethylene (HMWPE), ultra-high molecular weight polyethylene (UHMWPE), polypropylene (PP), carboxymethyl cellulose (CMC), polyvinylphenol, polyvinylpyrrolidine, polyvinyl acetate, polyvinyl alcohol, and polyacetylene.

8. The electrode plate for a lithium secondary battery according to claim 1,

wherein the first particle comprises 3.6 to 9% by weight of binder, based on the total weight of the first particle, wherein the second particle comprises 1 to 5% by weight of binder, based on the total weight of the second particle.

9. The electrode plate for a lithium secondary battery according to claim 1,

wherein the first particle and the second particle each, independently of each other, further comprise a sulfide-based solid electrolyte represented by Formula 1,

[Formula 1]  $Li_k M^2_l S_m X^2_n$,

wherein $M^2$ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, $X^2$ is F, Cl, Br, I, Se, Te or O, and $0 < k \leq 6$, $0 < l \leq 6$, $0 < m \leq 6$, and $0 \leq n \leq 6$.

10. A lithium secondary battery comprising the electrode plate for a lithium secondary battery according to claim 1.

[FIG. 1]

[FIG. 2]

## 200

[FIG. 3]

[FIG. 4]

| D10 | 29um |
| D50 | 40um |
| D90 | 58um |

[FIG. 5]

| D10 | 22um |
| D50 | 31um |
| D90 | 43um |

[FIG. 6]

[FIG. 7]

[FIG. 8]

[FIG. 9]

250 μm

[FIG. 10]

## INTERNATIONAL SEARCH REPORT

| International application No. |
| --- |
| **PCT/KR2024/004095** |

**A. CLASSIFICATION OF SUBJECT MATTER**

**H01M 4/13**(2010.01)i; **H01M 4/139**(2010.01)i; **H01M 4/62**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/13(2010.01); H01M 10/052(2010.01); H01M 4/139(2010.01); H01M 4/36(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 집전체 (collector), 엣지 (edge), 과립 (granule), 바인더 (binder), 횡방향 (TD, transverse direction), 고체 전해질 (solid electrolyte), 이차전지 (secondary battery)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 5403153 B2 (KABUSHIKI KAISHA TOYOTA JIDOSHOKKI) 29 January 2014 (2014-01-29) See paragraphs [0001], [0045], [0048], [0062]-[0063] and [0105]; claims 8 and 12; and figures 2 and 5A. | 1-10 |
| Y | KR 10-2023-0014643 A (TOYOTA JIDOSHA KABUSHIKI KAISHA) 30 January 2023 (2023-01-30) See abstract; and paragraphs [0098]-[0104] and [0114]. | 1-10 |
| A | JP 2018-073602 A (TOYOTA MOTOR CORP.) 10 May 2018 (2018-05-10) See entire document. | 1-10 |
| A | KR 10-2021-0044503 A (LG CHEM, LTD.) 23 April 2021 (2021-04-23) See entire document. | 1-10 |
| A | JP 2016-122631 A (TOYOTA MOTOR CORP. et al.) 07 July 2016 (2016-07-07) See entire document. | 1-10 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **26 June 2024** | **01 July 2024** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/004095**

| Patent document cited in search report | | | Publication date (day/month/year) | Patent family member(s) | | | Publication date (day/month/year) |
|---|---|---|---|---|---|---|---|
| JP | 5403153 | B2 | 29 January 2014 | DE | 112011101607 | T5 | 11 April 2013 |
| | | | | US | 2013-0022867 | A1 | 24 January 2013 |
| | | | | US | 9263730 | B2 | 16 February 2016 |
| | | | | WO | 2011-142083 | A1 | 17 November 2011 |
| KR | 10-2023-0014643 | A | 30 January 2023 | CN | 115692594 | A | 03 February 2023 |
| | | | | JP | 2023-016208 | A | 02 February 2023 |
| | | | | US | 2023-0027943 | A1 | 26 January 2023 |
| JP | 2018-073602 | A | 10 May 2018 | JP | 6878831 | B2 | 02 June 2021 |
| KR | 10-2021-0044503 | A | 23 April 2021 | CN | 113039667 | A | 25 June 2021 |
| | | | | EP | 3855533 | A1 | 28 July 2021 |
| | | | | EP | 3855533 | A4 | 06 April 2022 |
| | | | | JP | 2022-524671 | A | 10 May 2022 |
| | | | | JP | 7297060 | B2 | 23 June 2023 |
| | | | | US | 2021-0399278 | A1 | 23 December 2021 |
| | | | | WO | 2021-075773 | A1 | 22 April 2021 |
| JP | 2016-122631 | A | 07 July 2016 | CN | 107004837 | A | 01 August 2017 |
| | | | | CN | 107004837 | B | 24 April 2020 |
| | | | | EP | 3240066 | A1 | 01 November 2017 |
| | | | | EP | 3240066 | B1 | 14 September 2022 |
| | | | | HU | E060288 | T2 | 28 February 2023 |
| | | | | KR | 10-1942254 | B1 | 25 January 2019 |
| | | | | KR | 10-2017-0095956 | A | 23 August 2017 |
| | | | | PL | 3240066 | T3 | 19 December 2022 |
| | | | | US | 10297815 | B2 | 21 May 2019 |
| | | | | US | 2018-0159114 | A1 | 07 June 2018 |
| | | | | WO | 2016-103939 | A1 | 30 June 2016 |

Form PCT/ISA/210 (patent family annex) (July 2022)

**REFERENCES CITED IN THE DESCRIPTION**

**Patent documents cited in the description**

- KR 1020230040898
- KR 1020240042597
- JP 2022075282 A